# EUROPEAN PATENT SPECIFICATION

(11) **EP 1 969 837 B1**
(45) Date of publication and mention of the grant of the patent: **21.09.2016**
(21) Application number: 07716231.1
(22) Date of filing: 03.01.2007
(51) Int. Cl.: H04N 5/64, H04N 5/775

(54) **IN-VEHICLE DOCKING STATION FOR A PORTABLE MEDIA PLAYER**
ANDOCKSTATION FÜR EIN TRAGBARES MEDIENABSPIELGERÄT IN EINEM FAHRZEUG
STATION D'ANCRAGE POUR LECTEUR MULTIMÉDIA PORTABLE UTILISÉ A L'INTÉRIEUR D'UN VÉHICULE

(30) Priority: 04.01.2006 US 756260 P
(43) Date of publication of application: 17.09.2008
(73) Proprietor: AUDIOVOX CORPORATION, Hauppauge, New York 11788 (US)
(72) Inventor: SHALAM, David, M., Syosset, NY 11791 (US); TRANCHINA, James, R., Dix Hills, NY 11746 (US)
(74) Representative: Isarpatent
(86) International application number: PCT/US2007/000059
(87) International publication number: WO 2007/081700

(56) References cited:
- DE-A1-102004 023 636
- US-A1- 2003 128 504
- US-A1- 2003 176 935
- US-A1- 2004 085 485
- US-A1- 2004 112 931
- US-A1- 2004 227 372
- US-A1- 2004 227 696
- US-A1- 2004 227 861
- US-A1- 2004 228 622
- US-A1- 2005 052 046
- US-A1- 2005 239 434
- US-A1- 2005 281 414
- US-B1- 6 979 038
- US-B2- 6 899 365
- VOLKSWAGEN AG: "GRENZENLOSER MUSIKGENUSS. MOBILES KLANGWUNDER. DER GOLF UND DER APPLE IPOD" ANNOUNCEMENT VOLKSWAGEN, no. 592.1240.13.01, 1 August 2005 (2005-08-01) , page 1, XP002443381
- ANONYMOUS: 'Vaio User Guide - VGN-FS Series' SONY, [Online] 01 January 2005, pages 1 - 140, XP055194227 Retrieved from the Internet: <URL:http://download.sony-europe.com/pub/ma nuals/Notebooks/FS1/FS1_H_EN.pdf> [retrieved on 2015-06-08]
- ANONYMOUS: 'Datenblatt Pocket LOOX 718 Pocket LOOX 720 Der ultimative Handheld', [Online] 01 October 2005, pages 1 - 2, XP055194186 Retrieved from the Internet: <URL:http://support.harlander.com/uploads/t reiberdatenbank/pdas_organizer/fujitsu_siem ens/loox_720/datenblatt.pdf> [retrieved on 2015-06-08]

## Description

The present invention relates to an entertainment system mountable within a headrest of a vehicle.

US 2004/0112931 A1 discloses an entertainment system including an entertainment device, a suspension platform and, optionally, a storage back. The suspension platform is removal be secured on a seat back of a front seat of a vehicle. Alternatively, the suspension platform may be removal suspended in between to front seats of a vehicle. In either location the suspension platform provides means for securing an entertainment device inside the passenger vehicle, for use by one or more occupants of the rear seats in the passenger vehicle. The storage back provides means for storing the entertainment device and suspension platform, and also such accessories as maybe employed with these items.

### BACKGROUND OF THE INVENTION

### 1. Technical Field:

The present disclosure relates to entertainment systems, and more particularly to vehicle entertainment systems which include entertainment consoles having a docking station capable of docking a media player (e.g. IPOD®, MP3 player or MP4 player) within the vehicle and to such entertainment systems that are also usable outside of a vehicle at a desired location (e.g. home or office).

### 2. Discussion of the Related Art:

As society becomes more mobile and therefore spends a greater amount of time traveling and away from home, demand rises for electronic appliances and devices outside the home environment. For example, video screens have been mounted in the
Headrests of vehicles, facilitating video entertainment on the road. These video screens are connected to video players located, for example, in the glove box of the vehicle. However, the video player and video screen cannot be removed from the vehicle. Thus, videos may only be viewed with such systems when occupying the vehicle.

U.S. Patent Publication No. 2005239434 discloses a multimedia device integration system. One or more after-market audio or video devices, such as a CD player, CD changer, digital media device (e.g., MP3 player, MP4 player, WMV player, Apple iPod, portable music center, or other device) satellite receiver (e.g., XM or Sirius receiver), DAB receiver, video device (e.g., DVD player), cellular telephone, or any other device or combinations thereof, is integrated for use with an existing OEM or after-market car stereo or video system, wherein control commands can be issued at the car stereo or video system and data from the after-market device can be displayed on the car stereo or video system. Control commands generated at the car stereo or video system are received, processed, converted into a format recognizable by the after-market device, and dispatched to the after-market device for execution. Information from the after-market device is converted into a format recognizable by the car stereo or video system, and dispatched to the car stereo or video system for display thereon. One or more auxiliary input sources can be integrated with the car stereo or video system, and selected using the controls of the car stereo or video system. A docking station is provided for docking a portable audio or video device for integration with the car stereo or video system.

U.S. Patent Publication No. 2005281414 discloses a system and method for controlling a personal digital media device is provided, the system and method using the controls of a vehicle audio system. An interface unit receives and translates vehicle audio system control signals and forwards the translated signals in a form interpretable by the personal digital media device for execution. The interface unit may also receive responses from the personal digital media device and forward translated responses to the vehicle audio system for, for example, display in the vehicle audio system's display device. In response to predetermined control signals from the vehicle audio system, the interface unit may command the personal digital media device to playback user-defined playlists named in accordance with a playlist naming convention. The vehicle operator is thus provided an intuitive way to control the personal digital media device remotely via the vehicle audio system's controls, including via steering wheel-mounted audio system controls.

U.S. Patent Publication No. 2003128504 discloses a docking station and holder for use with a portable computer, and in particular, an HP Jornada (TM) portable computer. The docking station has a contour that is designed to receive the HP Jornada portable computer. The docking station connects to a center console of a vehicle. The docking station has a cradle that holds the portable computer in place while driving. The docking station has a cigarette lighter adapter for power and a cable that connects it to a stereo system of the vehicle to provide for audio (MP3) playback of music like.

Volkswagen Ag: "Grenzenloser Musikgenuss. Mobiles Klangwunder. Der Golf und Der Apple Ipod" Announcement VOLKSWAGEN, no. 592.1240.13.01, 1 August 200 5 is an announcement of the car manufacturing company regarding the ability to listed to unlimited music while driving their vehicle.

U.S. Patent Publication No. 2004227372 discloses an entertainment system that comprises a media source, and a housing for supporting the media source, wherein the housing is coupled to an inner portion of a seat of a vehicle, and the media source is capable of being selectively connected to and disconnected from the housing.

U.S. Patent Publication No. 2004/0228622 A1 discloses a video system attachable to a docking station mounted in a headrest of a vehicle wherein media players may be connected to the video system for media reproduction.

Fujitsu Siemens: "Datenblatt Pocket LOOX 718 Pocket LOOX 720 Der ultimative Handheld" discloses a PDA device capable of reproducing media data and comprising USB host functionality to connect USB memory devices.

Therefore, a need exists for an entertainment system which includes a video display (e.g. LCD) and a docking station which is capable of docking a media player (e.g. IPOD(R)) within a vehicle (e.g. a headrest or ceiling of a vehicle) for use therein and which may also be removed from the vehicle for use outside of the vehicle, such as for example, in the home or office.

### SUMMARY OF THE INVENTION

In accordance with an exemplary embodiment of the present invention, an entertainment system for a vehicle is provided as defined in independent claim 1. The entertainment system includes an entertainment console which includes a display and at least one docking station. The at least one docking station receives a portable media player therein and operatively connects the media player to the entertainment console.

Advantageous embodiments are defined in the dependent claims.

### BRIEF DESCRIPTION THE DRAWINGS

Exemplary embodiments of the present invention can be understood in more detail from the following detailed description taken in conjunction with the accompanying drawings, in which:
Figure 1 shows a front view of an entertainment console, which mounts in a headrest of a vehicle, according to an embodiment of the present invention;
Figure 2 shows a top view of the entertainment console of Figure 1 including a slot for the portable media player, according to an embodiment of the present invention;
Figure 3 shows a side view of the entertainment console of Figure 1 including a slot for the portable media player, according to an embodiment of the present invention;
Figure 4 shows a side view of the entertainment console of Figure 1 mounted in a headrest and pivoted outward, according to an embodiment of the present invention; and
Figure 5 shows a perspective view of an entertainment console, including a slot for the portable media player, which is mounted overhead in a vehicle, according to an embodiment of the present invention.

### DETAILED DESCRIPTION OF THE EMBODIMENTS

The present invention will now be described more fully hereinafter with reference to the accompanying drawings, in which exemplary embodiments of the present invention are shown. The present invention may, however, be embodied in many different forms and should not be construed as being limited to the exemplary embodiments set forth herein.

Exemplary embodiments of the present invention relate to an in-vehicle docking station for a portable media player. For example, the docking station is coupled to an entertainment console mounted overhead or in a headrest of a seat of a vehicle, such as, for example, an automobile, minivan or sport utility vehicle (SUV). In accordance with an embodiment, the docking station includes a slot or recess which receives a portable media player, such as, for example, an IPOD®. The slot or recess includes an electrical connector, which mates with a corresponding electrical connector on the portable media player.

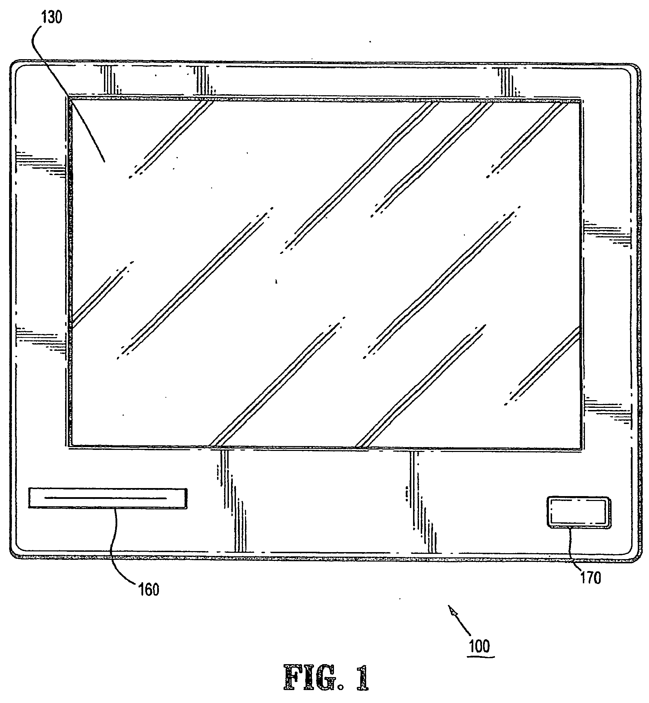

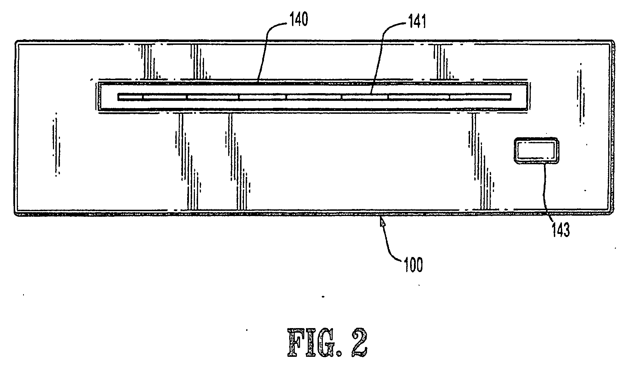

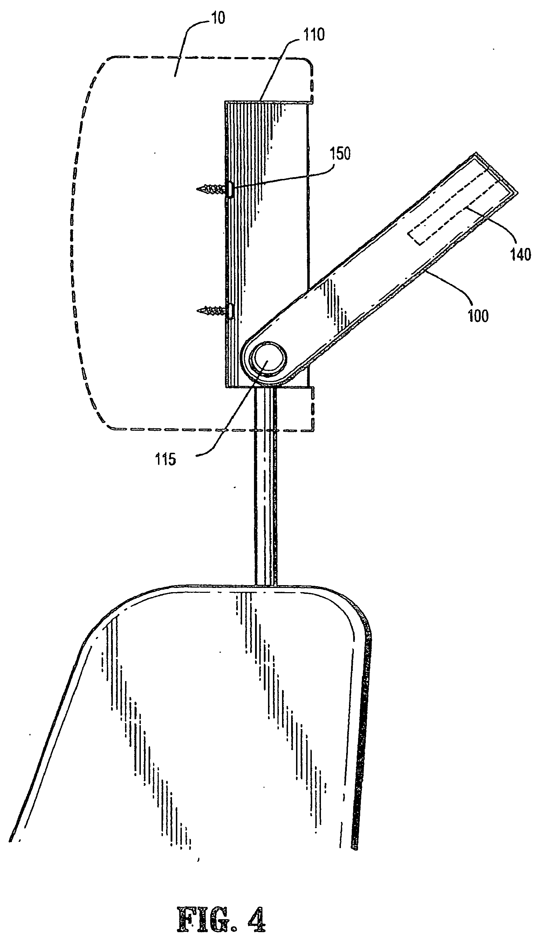

Referring to Figures 1-4, a headrest 10 includes an entertainment console 100 mounted therein. The entertainment console 100 is coupled to a housing 110 via a hinge 115 located on left and right sides of the entertainment console 100. The hinge 115 can be located at bottom, top or middle portions of the housing 110. Alternative hinges known to those of ordinary skill in the art may be used and the angle range of rotation of the entertainment console 100 may be varied depending on design preferences. The housing is coupled to the headrest 10 using fixing devices, such as, for example, screws 150.

The entertainment console 100 includes a display 130 having a screen for displaying video. The screen is preferably an LCD type display, but may be another type of display, such as, for example, an organic LED or electro-luminescent display.

The entertainment console 100 includes a slot 140 for receiving a portable media player, such as, for example, an IPOD® or any other type of MP3 or MP4 player, that plays video and/or audio programs, which are downloaded and stored on the media player's memory. For example, an MP4 player which may be used in accordance with embodiments of the present invention may include but is not limited to having features such as a color super-twist nematic (CSTN) screen, mass memory of 128M-2G, movie and mpegtv (MTV) player, synchronized video and audio display, support for AMV video file format (e.g. a video file format produced for MP3/MP4/MTV players), USB 2.0, fast download speeds, ID3 support, lyrics display, recording and repeating function, electronic album, FM radio function, e-book function, several play modes and EQ modes, multilingual support (English, Japanese, French, German, Italian, Portuguese, Polish, Spanish, etc.), driver free above Win98, built in rechargeable Li-polymer battery, and a size of 90*40*8mm.

The slot 140 is preferably located on a top side of the entertainment console 100 so that the slot is exposed when the entertainment console is pivoted outward away from the housing 110. Alternatively, the slot may be located on left, right, bottom, front or back sides of the entertainment console 100.

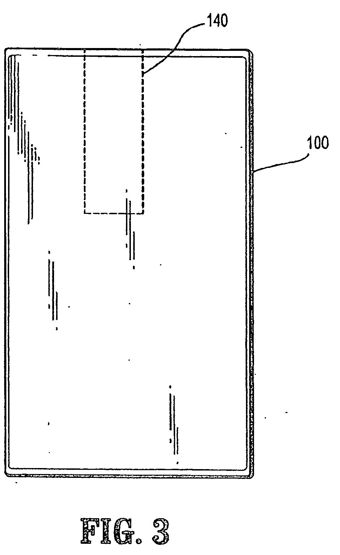

Referring to Figure 3, when the entertainment console 100 is in the pivoted position, a user inserts the portable media player into the slot 140 until the portable media player is fixed therein. The user then pivots the entertainment console 100 back into the housing 110 so that the entertainment console is substantially flush with the back of the headrest and in a position for a user (e.g., a backseat passenger) to view the display 130. The portable media player can be released from the slot 140 by pressing a release button 143, which is coupled to a spring-loaded mechanism for pushing the portable media player out of the slot 140. Alternatively, the depth of the slot can be smaller than the height of the portable media player, such that the media player does not sit flush with the side of the entertainment console, and is able to be grabbed and pulled out by a user without the aid of a spring loaded mechanism.

The slot 140 includes a connector 141 at a bottom portion thereof, or in any suitable location so as to mate with a corresponding connector on the portable media player. The connector 141 includes contacts for mating with corresponding contacts on the portable media player. For example, the connector 141 includes a metal pin array to mate with a corresponding male or female pin array located on the portable media player. It is to be understood that the connector 141 may be any type of standardized connection for connecting to the portable media player.

Data from the media player, such as, for example, audio, video and meta data is supplied via the connector 141 to the entertainment console 100. In accordance with the received data, the display 130 displays a video program and/or meta data, and outputs corresponding audio through speakers (not shown) attached to the display 130 and/or to entertainment console 100. Alternatively, audio can be supplied via the connector 141 to a vehicle sound system, which is electrically connected to the entertainment console 100 and the connector 141. Further, audio signals can be supplied via the connector 141 to an infrared or radio frequency wireless transmitter (not shown), which can format the audio signals for wireless transmission and wirelessly transmit the signals to a receiver located in, for example, wireless headphones.

Control signals, such as play, stop, pause, rewind, fast-forward are transferred from the entertainment console 100 to the portable media unit via the connector 141. The control signals can be received using a remote control, which sends control signals to an infrared receiver 170 located on the front face of the console 100. Alternatively, control buttons for controlling playing of programs can be located directly on the console 100.

Power can be supplied to the portable media player, via the connector 141, from a power source, such as, for example, the vehicle's battery. The entertainment console 100 can be electrically connected to, for example, a wire harness of the vehicle to receive power from the vehicle. When inserted in the slot 140, the portable media player may operate using the vehicle's power and may also charge its batteries.

In another example, the portable media player is connected to the entertainment console 100 via a port 160 located on the front face of the entertainment console 100, whereby a wire connector running from the portable media player is plugged into the port 160. The port 160 may be located in any convenient location within reach of a user. Like the connector 141, data, such as video, audio and meta data can be transferred from the portable media player to the entertainment console via the port 160. Further, control signals and power may be transferred through the port 160 to the portable media player.

The port 160 may be, for example, a universal serial bus (USB) type port and include contacts for mating with corresponding contacts on a USB connector coupled to the portable media player. It is to be understood that the port 160 may be any type of standardized connection for transferring multimedia data and/or power from and to the portable media player.

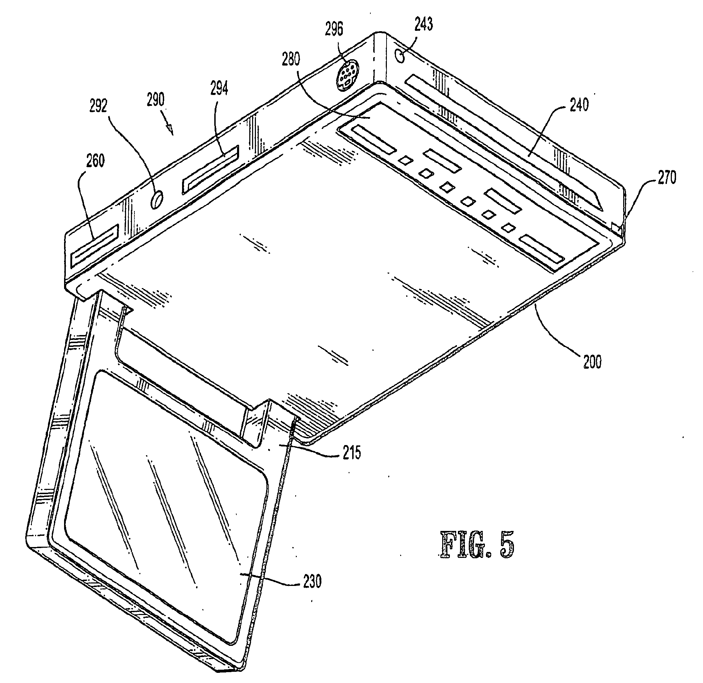

Referring to Figure 5, an entertainment console 200 is mounted overhead in a vehicle, for example, to a vehicle ceiling. The entertainment console 200 may be coupled to the vehicle ceiling using fixing devices, such as, for example, screws.

The entertainment console 200 includes a display 230 having a screen for displaying video. Like the display 130, the screen is preferably an LCD type display, but may be another type of display, such as, for example, an organic LED or electro-luminescent display. The display 230 is pivotally coupled to the entertainment console 200, using a hinge mechanism 215. The display 230 may be folded such that the screen rests on the console 200 when not in use. Alternative hinges known to those of ordinary skill in the art may be used and the angle range of rotation of the display 230 may be varied depending on design preferences.

Like the entertainment console 100, the entertainment console 200 includes a slot 240 for receiving a portable media player. The slot 240 is preferably located on a front face of the entertainment console 200. Alternatively, the slot may be located on left, right, bottom, or back sides of the entertainment console 200.

The portable media player can be released from the slot 240 by pressing a release button 243, which is coupled to a spring-loaded mechanism for pushing the portable media player out of the slot 240. Alternatively, the depth of the slot can be smaller than the height of the portable media player, such that the media player does not sit flush with the face of the entertainment console, and is able to be grabbed and pulled out by a user without the aid of a spring loaded mechanism.

Like the slot 140, the slot 240 includes a connector having contacts for mating with corresponding contacts on the portable media player, so that power can be supplied to the portable media player and data from the media player can be supplied via the connector to the entertainment console 200. The display 230 displays a video program and/or meta data received from the portable media player, and outputs corresponding audio through speakers (not shown) attached to the display 230 and/or to entertainment console 200. Alternatively, audio can be supplied via the connector to a vehicle sound system, which is electrically connected to the entertainment console 200 and the connector. Further, audio signals can be supplied via the connector to an infrared or radio frequency wireless transmitter (not shown) for wireless transmission of audio signals as described above.

Control signals, such as play, stop, pause, rewind, fast-forward are transferred from the entertainment console 200 to the portable media unit via the connector. The control signals can be received using a remote control, which sends control signals to an infrared receiver 270 located on the front face of the console 200. Alternatively, control buttons 280 for controlling playing of programs can be located directly on the console 200.

Like the entertainment console 100, the entertainment console 200 can be electrically connected to, for example, a wire harness of the vehicle to receive power from the vehicle. When inserted in the slot 240, the portable media player may operate using the vehicle's power and may also charge its batteries.

In another alternative, the portable media player is connected to the entertainment console 200 via a port 260 located on the side of the entertainment console 200, whereby a wire connector running from the portable media player is plugged into the port 260. The port 260 may be located in any convenient location within reach of a user. Like the connector, data can be transferred from the portable media player to the entertainment console via the port 260. Further, control signals and power may be transferred through the port 260 to the portable media player.

Like the port 160, the port 260 may be, for example, a universal serial bus (USB) type port and include contacts for mating with corresponding contacts on a USB connector coupled to the portable media player.

It is further noted that in some embodiments of the present invention, the entertainment consoles 100 , 200 can also act as a universal dock, in that they may be adapted to accommodate/fit several different models of each type of media player (e.g. several different IPOD® models) within the same docking station of the entertainment console. For example, in some embodiments, through the use of interchangeable inserts or dock adapters which correspond to a particular media player, a user may place one of these inserts or adapters into the docking station, e.g. the slot 140 or 240 to be able to dock that particular media player model within the docking station of the entertainment console 100, 200. Then, if desired, the user can replace the media player model currently inserted into the slot of the entertainment console, with a different media player model by simply removing the insert/adapter and first media player model and then placing a new insert/adapter which corresponds to the next media player model to be inserted into the slot. Some of these inserts or adapters may be sold with the media player together or may be purchased separately. Accordingly, entertainment consoles of embodiments of the present invention may be used with a wide range of media player models.

Furthermore, in other examples, the entertainment consoles may be positioned in other locations of a vehicle as well, such, for example, in a center console, or in a vehicle dashboard. In addition, a slot for receiving the portable media player may be positioned remote from a display positioned elsewhere in the vehicle. Also, the entertainment console may be connected to more than one display.

Moreover, entertainment consoles, including those embodiments depicted in Figs. 1-5, may further include a data output assembly which connects to an external device or devices away from the entertainment console (e.g. to another display screen within the vehicle or to a vehicle sound system) for outputting data from the media player to the external device. For example, as shown in Fig. 5, in some embodiments, the data output assembly 290 may include a line out port 292, a dock connector cable connection 294 and an S-video out connector 296. It is noted that the embodiments of the present invention are not limited to the above structure for the data output assembly 290. A description of how the data output assembly 290 may be used in accordance with embodiments of the present invention is set forth below by way of example only and is not meant to limit the scope of the present invention.

For example, one may view video from the media player on another display located within the vehicle and away from the entertainment console 100, 200 by connecting an AV cable to the line out port 292 of the data output assembly 290 of the entertainment console and also to the other display located within the vehicle. Moreover, one may listen to audio data from the media player docked within the entertainment console 100, 200 on a vehicle sound system by connecting an audio cable to the line port 292 of the data output assembly 290 of the entertainment console and to a vehicle sound system. Also, the dock connector cable connection 294 may be used, for example, to connect the media player to a computer within the vehicle or to a power adapter within the vehicle using a USB cable. Additionally, one may view video from the media player docked within the entertainment console 100, 200 on another display located within the vehicle away from the entertainment console 200 by connecting an S-video cable to the S-Video out 296 of the data output assembly 290 of the entertainment console 100, 200 and to the other display within the vehicle. It is further noted that the data output assembly on the entertainment console allows for the entertainment console to be connected to multiple external devices simultaneously.

An entertainment console such as for example, the entertainment consoles 100, 200 of the examples of Figs. 1-5, may be used outside of a vehicle instead of being mounted therein. The entertainment console 100 or 200 may be used outside of the vehicle wherein data such as video data and audio data obtained from the media player, e.g. IPOD®, connected to the docking station (e.g. slot or port) of the entertainment console is displayed on the display of the entertainment console and also output through speakers of the entertainment console, thereby providing an out of vehicle display. In other words, data received from the media player may be played directly on entertainment console outside of the vehicle via the display and speakers of the entertainment console. The entertainment console may also control the playing of programs or control the data which is received from the media player via, e.g., control buttons and/or by remote control in a similar fashion as described in the in vehicle examples depicted in Figs. 1-5.

The entertainment console 100, 200 can be removed from the headrest or overhead portion of the vehicle to be operated outside of the vehicle.

Furthermore, an entertainment console such as for example, the entertainment consoles 100, 200 of the embodiments of Figs. 1-5 may be used outside of a vehicle by connecting the entertainment console to an external device such as, for example, to a home computer, a home theater system, a television set or a stereo for being able to view or listen to the data received from the media player on the external device at home, the office or other desired location. In some embodiments, the connection of the entertainment console to the external device may be accomplished via the data output assembly 290 in a similar fashion as mentioned with regard to the in-vehicle embodiments of Fig. 1-5. A discussion regarding how the data assembly of the entertainment console may be used outside of a vehicle in accordance with embodiments of the present invention is set forth below by way of example only and is not meant to limit the scope of the present invention.

For example, the entertainment console could be connected to an external device or devices such as, for example, speakers, a stereo or a television set in the home or office by connecting an AV cable to the line out port 292 of the data output assembly 290 of the entertainment console and to the external device such that data (e.g. video or audio data) from the media player is outputted to these external devices for viewing and/or listening to this data on the external device. In addition, the entertainment console could also be connected to a television set by connecting an S-video cable to the S-video out port 296 of the data output assembly 290 of the entertainment console and to the television set. Moreover, the entertainment console could also be connected to a computer, (e.g. a personal computer (PC)) by connecting a USB cable to the dock connector cable connection 294 of the data output assembly and to the computer. It is again noted that the entertainment console may be connected to multiple external devices simultaneously.

In other embodiments, a user may alternate between mounting the entertainment console within a vehicle for use therein and then removing the entertainment console from the vehicle for use outside of the vehicle. In still other embodiments, regardless of whether the entertainment console is being used in or out of a vehicle, data (e.g. audio or video) from the portable media player connected to the docking station of the entertainment console may be downloaded into a memory of entertainment console and stored therein. This data may be later retrieved and played back from the entertainment console, even if the media player has been removed from connection with the entertainment console.
1. An entertainment system for a vehicle comprising:
   an entertainment console which includes a display and at least one docking station,
   and wherein the at least one docking station receives a portable media player at least partially therein and operatively connects the media player to the entertainment console.
2. The entertainment system of clause 1, wherein the media player comprises one of an IPOD®, an MP3 player or an MP4 player.
3. The entertainment system of clause 1, wherein the display of the entertainment console comprises one of a liquid crystal display (LCD), an organic light emitting diode (LED) display or an electro-luminescent display.
4. The entertainment system of clause 1, wherein the entertainment console downloads data from the media player into a memory of the entertainment console.
5. The entertainment system of clause 1, wherein the at least one docking station includes a slot located within the entertainment console for receiving the portable media player at least partially therein, and the slot includes an electrical connector which mates with a corresponding electrical connector of the portable media player.
6. The entertainment system of clause 1, wherein the entertainment console is adapted to receive data comprising at least one of video data, audio data or meta data from the media player via the connection between the media player and the entertainment console at the docking station.
7. The entertainment system of clause 6, wherein the entertainment console displays the video data received from the media player on the display of the entertainment console.
8. The entertainment system of clause 6, wherein the entertainment console outputs the audio data received from the media player through speakers connected to the entertainment console.
9. The entertainment system of clause 1, further comprising a data output assembly disposed on the entertainment console for being connected to a device which is external to the entertainment console to output data from the media player to the external device.
10. The entertainment system of clause 1, further comprising a port located on the entertainment console, wherein the port receives a wire connector from the media player to operatively connect the entertainment console to a media player.
11. The entertainment system of clause 1, wherein the entertainment console further comprises one or more control buttons on the entertainment console for controlling the playing of programs received from the media player on the entertainment console.
12. An entertainment system mounted within a headrest of a vehicle for docking a media player within the vehicle comprising:
   a housing mounted within the headrest of the vehicle; and
   an entertainment console which includes a video display and a docking station, wherein the docking station receives a media player at least partially therein and operatively connects the media player to the entertainment console, the docking station including at least one of a slot within the entertainment console or a port within the entertainment console,
   and wherein the entertainment console is housed within the housing.
13. The entertainment system of clause 12, wherein the entertainment console is pivotably coupled to the housing.
14. The entertainment system of clause 12, wherein the docking station comprises the slot, and wherein the slot includes an electrical connector which mates with a corresponding electrical connector of the portable media player such that the entertainment console and the media player are operatively connected to each other.
15. The entertainment system of clause 12, wherein the portable media player comprises one of an IPOD®, an MP3 player of an MP4 player.
16. The entertainment system of clause 12, wherein the entertainment console downloads data from the media player into a memory of the entertainment console.
17. The entertainment system of clause 14, wherein audio data from the media player is supplied via the electrical connector to a sound system of the vehicle, which is electrically connected to the entertainment console.
18. The entertainment system of clause 12, wherein the docking station comprises the port, and wherein the port receives a wire connector from the media player to operatively connect the entertainment console to the media player.
19. The entertainment system of clause 18, wherein the port comprises a universal serial bus (USB) port and includes contacts for mating with corresponding contacts on a USB connector coupled to the portable media player.
20. The entertainment system of clause 13, wherein the slot is accessed by pivoting the entertainment console with respect to the housing.
21. The entertainment system of clause 12, further comprising a data output assembly disposed on the entertainment console for being connected to a device which is
   external to the entertainment console to output data from the media player to the external device.
22. The entertainment system of clause 21, wherein the external device comprises at least one of a video display located within the vehicle and away from the entertainment console or a vehicle sound system.
23. The entertainment system of clause 21, wherein the data output assembly
   comprises at least one of a line out port, a dock connector cable connection slot or an S-video out port.
24. The entertainment system of clause 21, wherein the entertainment console is operatively connected to one or more displays positioned within the vehicle and away from the entertainment console via the data output assembly.
25. The entertainment system of clause 12, wherein the entertainment console further comprises an infrared receiver located on a front face of the entertainment console, and wherein said infrared receiver receives control signals from a remote control for controlling playing of programs from the media player on the entertainment console.
26. The entertainment system of clause 12, wherein the entertainment console is electrically connected to a wire harness of the vehicle to receive power from the
   vehicle, and wherein the media player operates using the power received from the vehicle.
27. The entertainment system of clause 12, wherein the entertainment console is removable from the housing to be operated outside of the vehicle.
28. An entertainment system mounted overhead to a ceiling within a vehicle for docking a portable media player within the vehicle comprising:
   an entertainment console which includes a video display and at least one docking station, wherein the entertainment console is connected to a ceiling of the vehicle, and the display is pivotably coupled to the entertainment console,
   and wherein the least at one docking station is adapted to receive a portable media player at least partially therein for operatively connecting the media player to the entertainment console.
29. The entertainment system of clause 28, wherein the media player comprises one of an IPOD®, an MP3 player of an MP4 player.
30. The entertainment system of clause 28, wherein the entertainment console is removable from the vehicle to be operated outside of the vehicle.
31. The entertainment system of clause 28, wherein the at least one docking station comprises a slot located within the entertainment console for receiving a portable media player at least partially therein, the slot includes an electrical connector which mates with a corresponding electrical connector of the portable media player.
32. The entertainment system of clause 28, further comprising a port located on the entertainment console, and wherein the port is adapted to receive a wire connector from the media player to operatively connect the entertainment console to the media player.
33. The entertainment system of clause 28, further comprising a data output assembly disposed on the entertainment console for being connected to a device which is external to the entertainment console to output data from the media player to the external device.
34. An in-vehicle docking system for a portable media player comprising:
   a docking unit located within an interior of a vehicle,
   and wherein the docking unit includes a docking station adapted for being connected to a media player to operatively connect the media player to an external device which is located away from the docking unit within the vehicle.
35. The in-vehicle docking system of clause 34, wherein the media player comprises at least one of an IPOD®, an MP3 player of an MP4 player.
36. The in-vehicle docking system of clause 34, wherein the external device comprises at least one of a video display located within the vehicle and away from the entertainment console or a vehicle sound system.

## Claims

1. An entertainment system arranged to be mounted within a headrest (10) of a vehicle for removably docking a portable media player within the vehicle comprising:
a housing (110) arranged to be mounted within the headrest (10) of the vehicle; and
an entertainment console (100) housed within the housing (110),
wherein the entertainment console (100) is connectable to the media player,
wherein the entertainment console (100) includes a video display (130) and a docking station,
wherein the docking station includes a slot (140) within the entertainment console (100) which is adapted to receive the media player therein to operatively connect the media player to the entertainment console (100),
wherein the depth of the slot (140) is not smaller than the height of the media player,
wherein the slot (140) includes an electrical connector (141) which is adapted to mate with a corresponding electrical connector of the removable media player, wherein data from the media player can be supplied via the connector (141) to the entertainment console (100),
wherein the entertainment console (100) is adapted to download the data from the media player into a memory of the entertainment console (100) for storage therein such that the data received from the media player may be retrieved and played back using the entertainment console (100), and
wherein control signals including play, stop, pause, rewind, and fast-forward, for controlling playing of programs from the media player on the entertainment console (100) are transferable from the entertainment console (100) to the portable media player via the connector (141).

2. The entertainment system of claim 1, wherein said control signals are received from control buttons located on the entertainment console (100).

3. The entertainment system of claim 1, wherein the entertainment console (100) having the docking station therein is removable from the housing (110) mounted within the headrest (10) of the vehicle to be operated outside of the vehicle.

4. The entertainment system of claim 1, wherein the entertainment console (100) is pivotably coupled to the housing (110), wherein the slot (140) is accessed by pivoting the entertainment console (100) with respect to the housing (110), such that the entertainment console (100) can be pivoted into the housing (110) so that the entertainment console is flush with the back of the headrest when the portable media player is received therein.

5. The entertainment system of claim 1, wherein the portable media player comprises one of an MP3 player or an MP4 player.

6. The entertainment system of claim 1, wherein audio data from the media player is supplied via the electrical connector (141) to a sound system of the vehicle, which is electrically connected to the entertainment console (100).

7. The entertainment system of claim 1, further comprising a data output assembly (290) disposed on the entertainment console (100) for being connected to a device which is external to the entertainment console (100) to output data from the media player to the external device.

8. The entertainment system of claim 7, wherein the external device comprises at least one of a video display located within the vehicle and away from the entertainment console (100) or a vehicle sound system.

9. The entertainment system of claim 7, wherein the data output assembly (290) comprises at least one of a line out port (292), a dock connector cable connection slot (294) or an S-video out port (296).

10. The entertainment system of claim 7, wherein the entertainment console (100) is operatively connected to one or more displays positioned within the vehicle and away from the entertainment console via the data output assembly (290).

11. The entertainment system of claim 1, wherein the entertainment console (100) further comprises an infrared receiver (170) located on a front face of the entertainment console (100), and wherein said infrared receiver is arranged to receive said control signals from a remote control for controlling playing of programs from the media player on the entertainment console (100).

12. The entertainment system of claim 1, wherein the entertainment console (100) is electrically connected to a wire harness of the vehicle to receive power from the vehicle, and wherein the media player operates using the power received from the vehicle.

13. The entertainment system of claim 1, wherein the docking station of the entertainment console (100) is adapted to receive therein a variety of interchangable inserts or dock adapters which correspond to a particular media player such that the docking station is adapted to accommodate / fit several different models of media player within the docking station, thereby constituting a universal dock.

## Patentansprüche

1. Unterhaltungssystem, das dafür vorgesehen ist, innerhalb einer Kopfstütze (10) eines Fahrzeugs montiert zu werden, um ein transportables Medienwiedergabegerät lösbar innerhalb des Fahrzeugs anzudocken, und das Folgendes umfasst:
ein Gehäuse (110), das dafür vorgesehen ist, innerhalb der Kopfstütze (10) des Fahrzeugs montiert zu werden; und
eine Unterhaltungskonsole (100), die in dem Gehäuse (110) aufgenommen ist,
wobei die Unterhaltungskonsole (100) mit dem Medienwiedergabegerät verbunden werden kann,
wobei die Unterhaltungskonsole (100) eine Videoanzeige (130) und eine Andockstation umfasst,
wobei die Andockstation einen Schlitz (140) innerhalb der Unterhaltungskonsole (100) umfasst, der dafür eingerichtet ist, das Medienwiedergabegerät aufzunehmen, um das Medienwiedergabegerät mit der Unterhaltungskonsole (100) wirkzuverbinden,
wobei die Tiefe des Schlitzes (140) nicht kleiner ist als die Höhe des Medienwiedergabegerätes,
wobei der Schlitz (140) einen elektrischen Verbinder (141) enthält, der dafür eingerichtet ist, mit einem entsprechenden elektrischen Verbinder des herausnehmbaren Medienwiedergabegerätes zusammenzupassen,
wobei Daten von dem Medienwiedergabegerät über den Verbinder (141) zu der Unterhaltungskonsole (100) übertragen werden können,
wobei die Unterhaltungskonsole (100) dafür eingerichtet ist, die Daten von dem Medienwiedergabegerät in einen Speicher der Unterhaltungskonsole (100) zur Speicherung darin herunterzuladen, dergestalt, dass die von dem Medienwiedergabegerät empfangenen Daten unter Verwendung der Unterhaltungskonsole (100) abgerufen und wiedergegeben werden können, und
wobei Steuerungssignale, einschließlich Wiedergabe, Stopp, Pause, Zurückspulen und Vorspulen, zum Steuern der Wiedergabe von Programmen von dem Medienwiedergabegerät auf der Unterhaltungskonsole (100) von der Unterhaltungskonsole (100) zu dem transportablen Medienwiedergabegerät über den Verbinder (141) übertragen werden können.

2. Unterhaltungssystem nach Anspruch 1, wobei die Steuerungssignale über Steuerungsknöpfe kommend empfangen werden, die sich an der Unterhaltungskonsole (100) befinden.

3. Unterhaltungssystem nach Anspruch 1, wobei die Unterhaltungskonsole (100), die mit der Andockstation versehen ist, aus dem Gehäuse (110), das innerhalb der Kopfstütze (10) des Fahrzeugs montiert ist, herausgenommen werden kann, um außerhalb des Fahrzeugs betrieben zu werden.

4. Unterhaltungssystem nach Anspruch 1, wobei die Unterhaltungskonsole (100) an dem Gehäuse (110) angelenkt ist, wobei der Schlitz (140) in Eingriff genommen wird, indem die Unterhaltungskonsole (100) mit Bezug auf das Gehäuse (110) dergestalt geschwenkt wird, dass die Unterhaltungskonsole (100) so in das Gehäuse (110) geschwenkt werden kann, dass die Unterhaltungskonsole bündig mit der Rückseite der Kopfstütze abschließt, wenn das transportable Medienwiedergabegerät darin aufgenommen ist.

5. Unterhaltungssystem nach Anspruch 1, wobei das transportable Medienwiedergabegerät einen MP3-Player oder einen MP4-Player umfasst.

6. Unterhaltungssystem nach Anspruch 1, wobei Audio-Daten von dem Medienwiedergabegerät über den elektrischen Verbinder (141) zu einem Soundsystem des Fahrzeugs übertragen werden, das elektrisch mit der Unterhaltungskonsole (100) verbunden ist.

7. Unterhaltungssystem nach Anspruch 1, das des Weiteren einen Datenausgabebaugruppe (290) umfasst, die an der Unterhaltungskonsole (100) angeordnet ist, um mit einer Vorrichtung verbunden zu werden, das sich außerhalb der Unterhaltungskonsole (100) befindet, um Daten von dem Medienwiedergabegerät an die externe Vorrichtung auszugeben.

8. Unterhaltungssystem nach Anspruch 7, wobei die externe Vorrichtung mindestens eines von Folgendem umfasst: eine Videoanzeige, die sich innerhalb des Fahrzeugs und von der Unterhaltungskonsole (100) entfernt befindet; und ein Fahrzeug-Soundsystem.

9. Unterhaltungssystem nach Anspruch 7, wobei die Datenausgabebaugruppe (290) mindestens eines von Folgendem umfasst: einen Line-out-Anschluss (292), einen Dockverbinderkabelanschlussschlitz (294), und einen S-Video-out-Anschluss (296).

10. Unterhaltungssystem nach Anspruch 7, wobei die Unterhaltungskonsole (100) über die Datenausgabebaugruppe (290) mit einer oder mehreren Anzeigen wirkverbunden ist, die innerhalb des Fahrzeugs und von der Unterhaltungskonsole entfernt positioniert sind.

11. Unterhaltungssystem nach Anspruch 1, wobei die Unterhaltungskonsole (100) des Weiteren einen Infrarot-Empfänger (170) umfasst, der sich an einer Vorderseite der Unterhaltungskonsole (100) befindet, und wobei der Infrarot-Empfänger dafür vorgesehen ist, die Steuerungssignale von einer Fernbedienung zum Steuern der Wiedergabe von Programmen von dem Medienwiedergabegerät an der Unterhaltungskonsole (100) zu empfangen.

12. Unterhaltungssystem nach Anspruch 1, wobei die Unterhaltungskonsole (100) elektrisch mit einem Kabelbaum des Fahrzeugs verbunden ist, um Strom von dem Fahrzeug zu empfangen, und wobei das Medienwiedergabegerät unter Verwendung des von dem Fahrzeug empfangenen Stroms arbeitet.

13. Unterhaltungssystem nach Anspruch 1, wobei die Andockstation der Unterhaltungskonsole (100) dafür eingerichtet ist, eine Vielzahl verschiedener gegeneinander austauschbarer Einsätze oder Andockadapter, die einem bestimmten Medienwiedergabegerät entsprechen, aufzunehmen, so dass die Andockstation dafür eingerichtet ist, mehrere verschiedene Modelle von Medienwiedergabegeräten in der Andockstation aufzunehmen oder einzupassen, wodurch ein Universal-Dock entsteht.

## Revendications

1. Système de divertissement agencé pour être monté à l'intérieur d'un appuie-tête (10) de véhicule afin d'ancrer de manière amovible un lecteur multimédia portable à l'intérieur du véhicule, comprenant :
un boîtier (110) agencé pour être monté à l'intérieur de l'appuie-tête (10) du véhicule ; et
une console de divertissement (100) logée à l'intérieur du boîtier (110),
dans lequel la console de divertissement (100) peut être connectée au lecteur multimédia,
dans lequel la console de divertissement (100) comprend un dispositif d'affichage vidéo (130) et une station d'ancrage,
dans lequel la station d'ancrage comporte à l'intérieur de la console de divertissement (100) un logement (140) qui est adaptée pour recevoir le lecteur multimédia en son sein afin de connecter fonctionnellement le lecteur multimédia à la console de divertissement (100),
dans lequel la profondeur du logement (140) n'est pas inférieure à la hauteur du lecteur multimédia,
dans lequel le logement (140) comprend un connecteur électrique (141) qui est adapté pour s'accoupler à un connecteur électrique correspondant du lecteur multimédia amovible,
dans lequel des données provenant du lecteur multimédia peuvent être fournies par l'intermédiaire du connecteur (141) à la console de divertissement (100),
dans lequel la console de divertissement (100) est adaptée pour télécharger les données provenant du lecteur multimédia dans une mémoire de la console de divertissement (100) pour les y stocker, de manière que les données reçues du lecteur multimédia puissent être récupérées et lues au moyen de la console de divertissement (100), et
dans lequel des signaux de commande comprenant la lecture, l'arrêt, la pause, le retour en arrière et l'avance rapide, destinés à commander la lecture de programmes provenant du lecteur multimédia sur la console de divertissement (100) peuvent être transférés de la console de divertissement (100) au lecteur multimédia portable par l'intermédiaire du connecteur (141).

2. Système de divertissement selon la revendication 1, dans lequel lesdits signaux de commande sont reçus au moyen de boutons de commande situés sur la console de divertissement (100).

3. Système de divertissement selon la revendication 1, dans lequel la console de divertissement (100) comportant la station d'ancrage en son sein peut être retirée du boîtier (110) monté à l'intérieur de l'appuie-tête (10) du véhicule pour être utilisée à l'extérieur du véhicule.

4. Système de divertissement selon la revendication 1, dans lequel la console de divertissement (100) est accouplée au boîtier (110) de manière à pouvoir pivoter, dans lequel le logement (140) est accessible par pivotement de la console de divertissement (100) par rapport au boîtier (110), de manière que la console de divertissement (100) puisse pivoter dans le boîtier (110) afin que la console de divertissement soit au même niveau que le dos de l'appuie-tête lorsque le lecteur multimédia portable y est reçu.

5. Système de divertissement selon la revendication 1, dans lequel le lecteur multimédia portable comprend soit un lecteur MP3 soit un lecteur MP4.

6. Système de divertissement selon la revendication 1, dans lequel des données audio provenant du lecteur multimédia sont fournies par l'intermédiaire du connecteur électrique (141) à une chaîne audio du véhicule qui est électriquement reliée à la console multimédia (100).

7. Système de divertissement selon la revendication 1, comprenant en outre un ensemble de sortie de données (290), disposé sur la console de divertissement (100) pour être connecté à un dispositif qui est extérieur à la console de divertissement (100) afin de délivrer en sortie des données provenant du lecteur multimédia au dispositif extérieur.

8. Système de divertissement selon la revendication 7, dans lequel le dispositif extérieur comprend au moins un dispositif d'affichage vidéo se trouvant à l'intérieur du véhicule et à distance de la console de divertissement (100), ou une chaîne audio du véhicule.

9. Système de divertissement selon la revendication 7, dans lequel l'ensemble de sortie de données (290) comprend au moins une prise de sortie de ligne (292) ou un logement de connexion du câble de raccordement à la station d'ancrage (294) ou encore une prise de sortie S-vidéo (296).

10. Système de divertissement selon la revendication 7, dans lequel la console de divertissement (100) est fonctionnellement connectée à un ou plusieurs dispositif(s) d'affichage positionné(s) à l'intérieur du véhicule et à distance de la console de divertissement, par l'intermédiaire de l'ensemble de sortie de données (290).

11. Système de divertissement selon la revendication 1, dans lequel la console de divertissement (100) comprend en outre un récepteur à infrarouge (170) situé sur une face avant de la console de divertissement (100), et dans lequel ledit récepteur à infrarouge est agencé pour recevoir lesdits signaux de commande en provenance d'une télécommande pour commander la lecture de programmes provenant du lecteur multimédia sur la console de divertissement (100).

12. Système de divertissement selon la revendication 1, dans lequel la console de divertissement (100) est électriquement reliée à un faisceau électrique du véhicule pour recevoir de l'énergie à partir du véhicule, et dans lequel le lecteur multimédia fonctionne au moyen de l'énergie reçue en provenance du véhicule.

13. Système de divertissement selon la revendication 1, dans lequel la station d'ancrage de la console de divertissement (100) est adaptée pour recevoir en son sein divers inserts ou adaptateurs interchangeables de station d'ancrage qui correspondent à un lecteur multimédia particulier, de sorte que la station d'ancrage est adaptée pour loger/accueillir différents modèles de lecteur multimédia à l'intérieur de la station d'ancrage, en constituant ainsi une station d'ancrage universelle.
